# EUROPEAN PATENT APPLICATION

(11) **EP 3 790 129 A1**
(43) Date of publication of application: **10.03.2021**
(21) Application number: 20193699.4
(22) Date of filing: 31.08.2020
(51) Int. Cl.: H01R 43/28

(54) **ULTRASONIC PROCESSING DEVICE AND ULTRASONIC PROCESSING METHOD**

(30) Priority: 06.09.2019 JP 2019163113
(71) Applicant: YAZAKI CORPORATION, Minato-ku, Tokyo 108-8333 (JP)
(72) Inventor: NABETA, Yasunori, Shizuoka, 421-0407 (JP); WARASHINA, Shinya, Shizuoka, 421-0407 (JP)
(74) Representative: Neumann Müller Oberwalleney & Partner Patentanwälte

(57) **Abstract**

An ultrasonic processing device applying an ultrasonic wave to workpieces to perform ultrasonic processing, the ultrasonic processing device includes, a support portion configured to support the workpieces, a pressurizing portion capable of moving in a direction of relatively approaching and separating from the support portion and configured to clamp the workpieces with the support portion, a vibrator provided on the support portion or the pressurizing portion and configured to apply ultrasonic vibration to the workpieces which are clamped between the support portion and the pressurizing portion, and a partition plate disposed between the support portion and the pressurizing portion and configured to divide a space between the support portion and the pressurizing portion into a plurality of processing spaces where the workpieces are capable of being disposed.

## Description

### TECHNICAL FIELD

The present invention relates to an ultrasonic processing device and an ultrasonic processing method.

### BACKGROUND ART

It is known to carry out a preliminary step of applying ultrasonic vibration to a conductor portion to slide strands with respect to each other so as to roughen surfaces of the strands before pressing and crimping a terminal to a conductor of an aluminum electric wire (see Patent Literature 1).

### Citation List

### Patent Literature

[Patent Document 1] JP-A-2009-231079

As described above, by applying ultrasonic waves and sliding the strands with respect to each other to roughen the surfaces of the strands, it is possible to improve adhesiveness between the terminal and the conductor portion of the electric wire and adhesiveness between the strands while breaking an oxide film of the strands. Further, an ultrasonic processing technology is also used in unifying processing of integrating the strands that form the conductor of the electric wire, joining processing of joining conductors of a plurality of electric wires, and the like.

By the way, in order to perform ultrasonic processing on the conductor of the electric wire, it is necessary to set the conductor to the ultrasonic processing device and apply ultrasonic waves each time, so that there is a need for improving the efficiency of the ultrasonic processing work.

### SUMMARY OF INVENTION

An ultrasonic processing device and an ultrasonic processing method according to an embodiment of the present invention is capable of efficiently performing ultrasonic processing on a workpiece to improve productivity.

An ultrasonic processing device applying an ultrasonic wave to workpieces to perform ultrasonic processing, the ultrasonic processing device comprising:
a support portion configured to support the workpieces;
a pressurizing portion capable of moving in a direction of relatively approaching and separating from the support portion and configured to clamp the workpieces with the support portion;
a vibrator provided on the support portion or the pressurizing portion and configured to apply ultrasonic vibration to the workpieces which are clamped between the support portion and the pressurizing portion; and
a partition plate disposed between the support portion and the pressurizing portion and configured to divide a space between the support portion and the pressurizing portion into a plurality of processing spaces where the workpieces are capable of being disposed.

### BRIEF DESCRIPTION OF DRAWINGS

Fig. 1 is a schematic perspective view of an ultrasonic processing device according to the present embodiment.
Fig. 2 is a schematic plan view of the ultrasonic processing device according to the present embodiment.
Fig. 3 is a schematic side view of the ultrasonic processing device according to the present embodiment.
Fig. 4 is a schematic side view of the ultrasonic processing device showing a dividing step in an ultrasonic processing method.
Fig. 5 is a schematic side view of the ultrasonic processing device showing an electric wire disposing step in the ultrasonic processing method.
Fig. 6 is a schematic side view of the ultrasonic processing device showing a partition releasing step in the ultrasonic processing method.
Fig. 7 is a schematic side view of the ultrasonic processing device showing an ultrasonic wave applying step in the ultrasonic processing method.
Fig. 8 is a schematic side view of an ultrasonic processing device illustrating another processing example.
Fig. 9 is a schematic front view of the ultrasonic processing device in which processing spaces are arranged in parallel.

### DESCRIPTION OF EMBODIMENTS

A specific embodiment according to the present invention will be described with reference to the drawings.

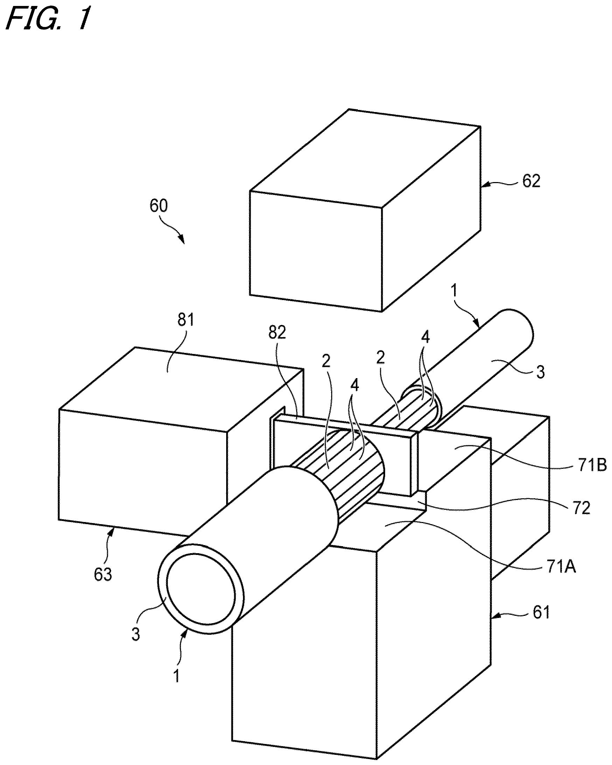

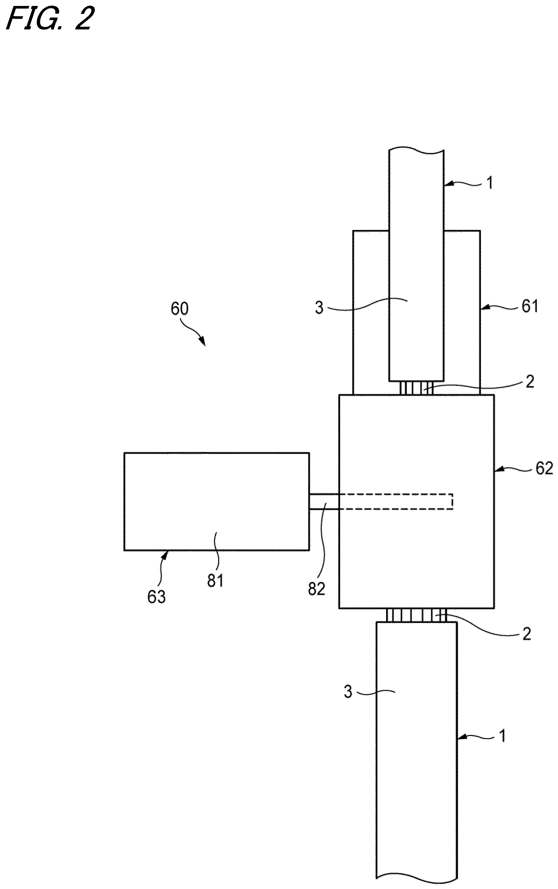

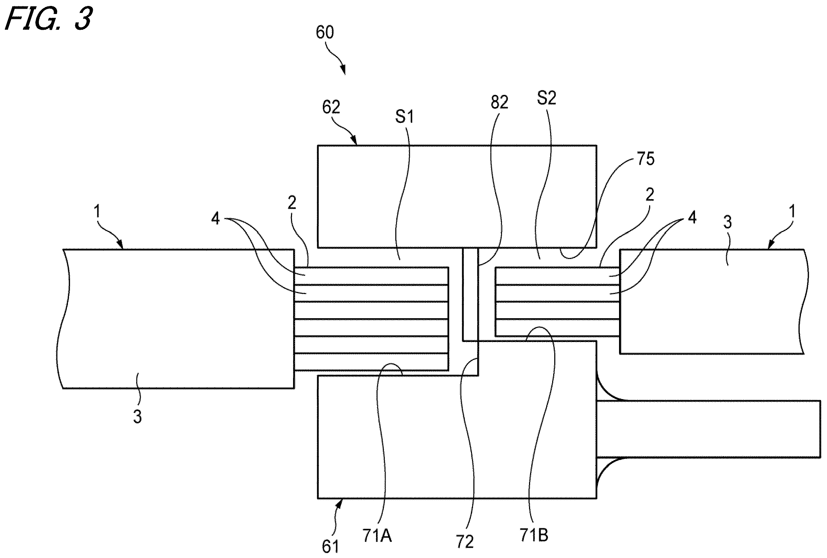

Fig. 1 is a schematic perspective view of an ultrasonic processing device according to the present embodiment. Fig. 2 is a schematic plan view of the ultrasonic processing device according to the present embodiment. Fig. 3 is a schematic side view of the ultrasonic processing device according to the present embodiment.

As shown in Figs. 1 to 3, an ultrasonic processing device 60 according to the present embodiment performs ultrasonic processing on electric wires 1, and includes a horn 61, an anvil 62, and a partition mechanism 63.

The electric wire 1 includes a conductor 2 and a sheath 3 covering a periphery of the conductor 2. The conductor 2 includes a plurality of strands 4 made of aluminum or an aluminum alloy. The sheath 3 is formed of a resin material having flexible and insulating properties. The sheath 3 is removed at both ends of the electric wire 1, and a part of the conductor 2 is exposed.

In the ultrasonic processing device 60, the anvil 62 is disposed above the horn 61. Then, the conductor 2 of the electric wire 1 which is a workpiece is inserted into and removed from a space between the horn 61 and the anvil 62. The anvil 62 is raised and lowered by a lifting mechanism (not shown). Accordingly, the horn 61 and the anvil 62 relatively approach and separate from each other. In the ultrasonic processing device 60, the horn 61 is a support portion on which the conductors 2 are placed, and the anvil 62 is a pressurizing portion that is lowered and pressurizes the conductors 2 placed on the horn 61.

A step 72 is formed on an upper surface of the horn 61, and the upper surface is formed as a first clamping surface 71A and a second clamping surface 71B with the step 72 as a boundary. The first clamping surface 71A and the second clamping surface 71B are disposed at different height positions. Specifically, the second clamping surface 71B is higher than the first clamping surface 71A. A lower surface of the anvil 62 facing the horn 61 is a clamping surface 75. In the ultrasonic processing device 60, processing spaces S1, S2 in which the ultrasonic processing is performed on the conductors 2 of the electric wires 1, which are the workpieces, are formed between the first clamping surface 71A of the horn 61 and the clamping surface 75 of the anvil 62 and between the second clamping surface 71B of the horn 61 and the clamping surface 75 of the anvil 62, respectively.

The horn 61 includes a vibrator (not illustrated) that causes ultrasonic vibration by feeding an alternating current, and is vibrated by the vibrator. Then, the ultrasonic processing device 60 applies ultrasonic waves to the conductors 2 of the electric wires 1, which are the workpieces, disposed in the processing spaces S1, S2 to perform the ultrasonic processing.

A partition mechanism 63 is disposed on a side of the horn 61 and the anvil 62. The partition mechanism 63 includes a drive unit 81 and a partition plate 82. The drive unit 81 is, for example, an actuator such as a solenoid, and moves the partition plate 82 forward and backward. By driving the drive unit 81, the partition plate 82 moves between a retracted position at which the partition plate 82 is retracted into the drive unit 81 and shifted from between the horn 61 and the anvil 62, and a partition position at which the partition plate 82 is laterally projected from the drive unit 81 and between the horn 61 and the anvil 62. When the partition plate 82 is disposed at the partition position, the partition plate 82 is disposed between the processing spaces S1, S2 which are between the horn 61 and the anvil 62, and the processing spaces S1, S2 are partitioned and divided by the partition plate 82.

Next, a case where the ultrasonic processing is performed on the electric wire 1 by the ultrasonic processing device 60 will be described for each step. In addition, here, a case where the ultrasonic waves are applied to the conductor 2 of the electric wire 1 and the unifying processing of integrating the strands 4 is performed is exemplified.

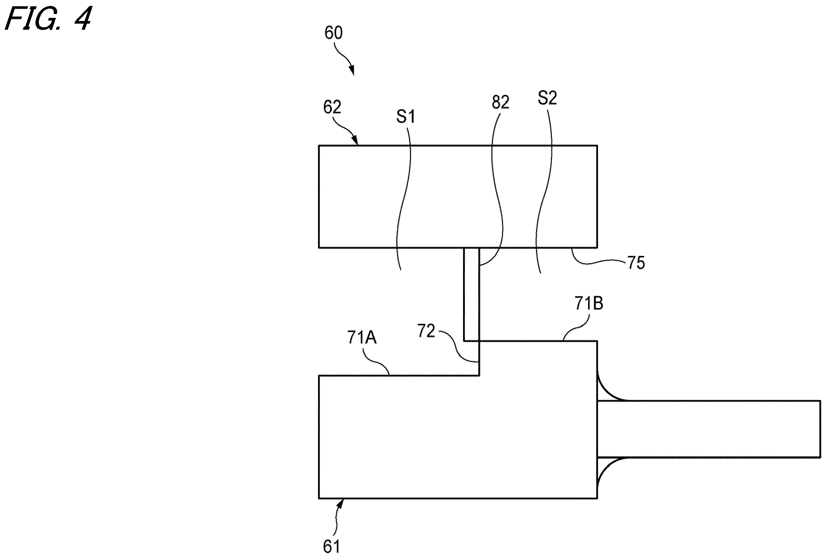

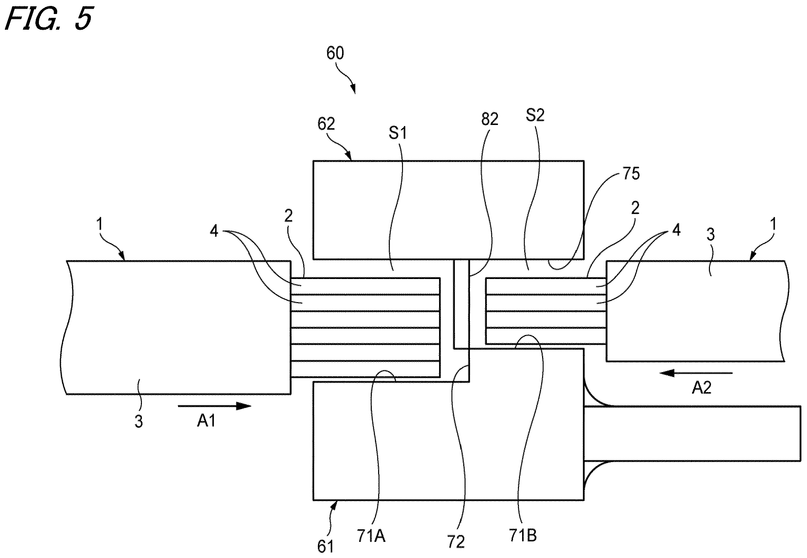

Fig. 4 is a schematic side view of the ultrasonic processing device showing a dividing step in an ultrasonic processing method. Fig. 5 is a schematic side view of the ultrasonic processing device showing an electric wire disposing step in the ultrasonic processing method.

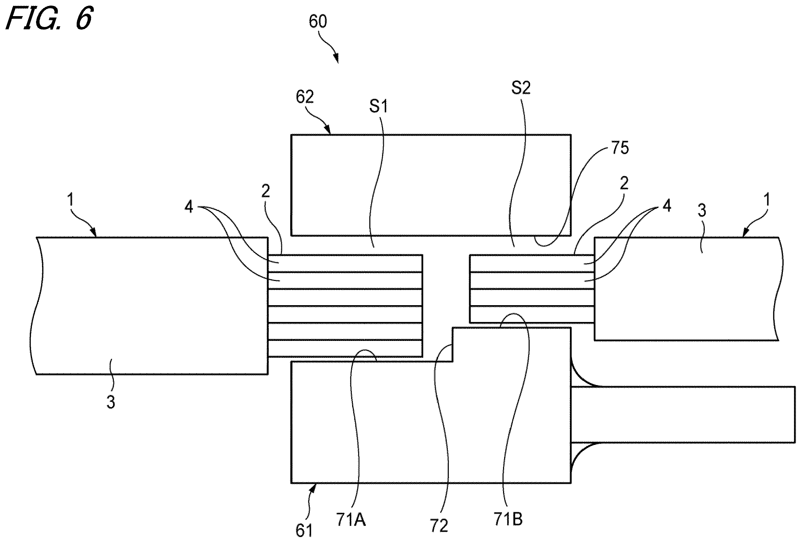

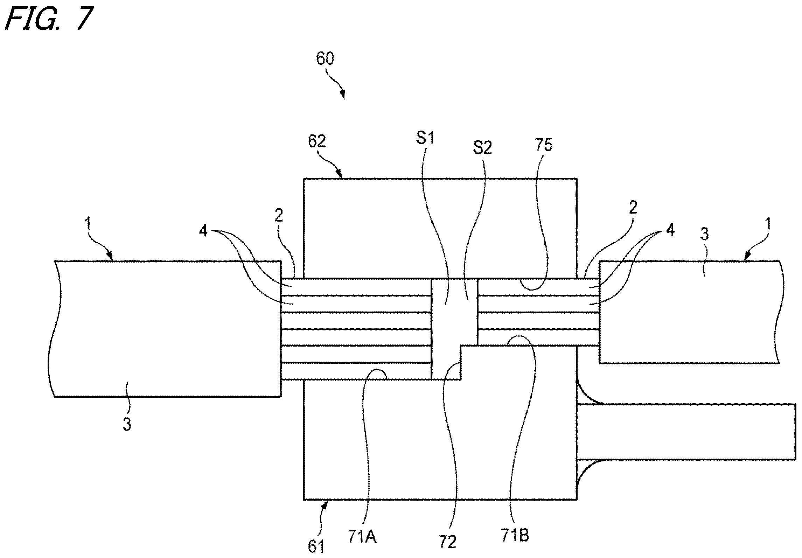

Fig. 6 is a schematic side view of the ultrasonic processing device showing a partition releasing step in the ultrasonic processing method. Fig. 7 is a schematic side view of the ultrasonic processing device showing an ultrasonic wave applying step in the ultrasonic processing method.

### (Dividing Step)

As shown in Fig. 4, the drive unit 81 of the partition mechanism 63 of the ultrasonic processing device 60 is driven, and the partition plate 82 is projected and disposed at a partition position between the horn 61 and the anvil 62. Accordingly, the processing spaces S1, S2 between the horn 61 and the anvil 62 are divided.

### (Electric Wire Disposing Step)

As shown in Fig. 5, the conductors 2 exposed from the sheaths 3 of the electric wires 1 are respectively inserted from opposite sides toward the processing spaces S1, S2 divided by the partition plate 82 between the horn 61 and the anvil 62 (see arrows A1, A2 in Fig. 5). Here, the processing space S1 formed by the first clamping surface 71A having a height lower than that of the second clamping surface 71B of the horn 61 and the clamping surface 75 of the anvil 62 has a height dimension larger than the processing space S2 formed by the second clamping surface 71B and the clamping surface 75 of the anvil 62. Therefore, the conductor 2 of the electric wire 1 is inserted in the processing space S1 and has a larger diameter than that of the processing space S2.

### (Partition Releasing Step)

As shown in Fig. 6, the drive unit 81 of the partition mechanism 63 is driven to retract the partition plate 82 partitioning the processing spaces S1, S2 between the horn 61 and the anvil 62, and the partition plate 82 is disposed at the retracted position shifted from between the horn 61 and the anvil 62.

### (Ultrasonic Wave Applying Step)

As shown in Fig. 7, when the anvil 62 is lowered, the conductors 2 of the electric wires 1 respectively disposed in the processing spaces S1, S2 are clamped between the horn 61 and the anvil 62 and pressurized, and feed an alternating current to the vibrator in the pressurized state. Then, the horn 61 is ultrasonically vibrated by the vibrator, and thus ultrasonic vibration energy is propagated to the conductors 2 of the electric wires 1 respectively disposed in the processing spaces S1, S2. Accordingly, the oxide film or the like on the surface of each strand 4 of the conductor 2 is destroyed and removed, and the strands 4 are joined and integrated with each other, so that the conductor 2 including the plurality of strands 4 of each electric wire 1 is unified. Then, the anvil 62 is raised and the conductors 2 of the electric wires 1 subjected to the ultrasonic processing are taken out from the processing spaces S1, S2, respectively.

As described above, according to the ultrasonic processing device and the ultrasonic processing method according to the present embodiment, the partition plate 82 can divide the space between the horn 61 and the anvil 62 into the plurality of processing spaces S1, S2. Accordingly, the ultrasonic processing can be performed simultaneously by disposing the conductors 2 of the electric wires 1 in the respective processing spaces S1, S2, and efficiency of ultrasonic processing work can be significantly improved and productivity can be increased. Moreover, by separating each processing position by the partition plate 82, it is possible to eliminate the problem that the conductors 2 of the electric wires 1 are unintentionally attached to each other during the ultrasonic processing.

Further, the partition plate 82 can be inserted into and removed from the space between the horn 61 and the anvil 62. Therefore, the partition plate 82 can be pulled out from the space between the horn 61 and the anvil 62 when the conductors 2 of the electric wires 1 disposed in the processing spaces S1, S2 are clamped between the horn 61 and the anvil 62. Accordingly, the partition plate 82 does not interfere with the subsequent ultrasonic processing of the conductor 2, and the ultrasonic processing can be smoothly performed.

Further, since the step 72 is formed on the horn 61 and the processing spaces S1, S2 have different height dimensions, the ultrasonic processing can be simultaneously performed on the conductors 2 having different diameters of the plurality of types of electric wires 1.

In addition, although the above embodiment describes the case where the plurality of strands 4 forming the conductor 2 of the electric wire 1 are joined to each other by the ultrasonic processing and made into a unified wire, the ultrasonic processing of applying ultrasonic waves to the conductor 2 to perform the ultrasonic processing is not limited to the unifying processing. For example, the ultrasonic processing is not limited to the unifying processing, and includes roughening of roughening the strands 4 by sliding the strands 4 with respect to each other to remove the oxide film on the surfaces of the strands 4, and the joining processing of joining the conductors 2 of the plurality of electric wires 1 to each other, and the like.

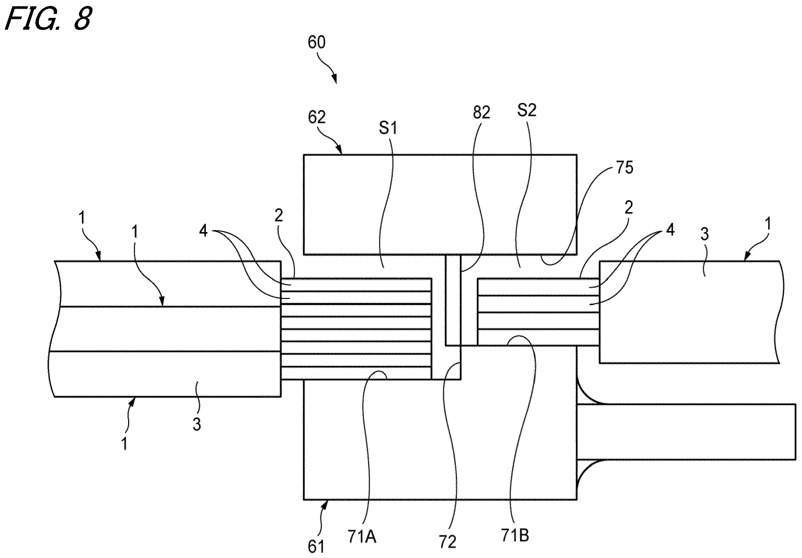

Fig 8 shows a processing example in which the ultrasonic wave processing device 60 performs the bonding processing of bonding the conductors 2 of the plurality of electric wires 1 and the unifying processing of unifying the conductor 2 of one electric wire 1 simultaneously.

As shown in Fig. 8, in this processing example, the conductors 2 of the plurality of electric wires 1 are disposed in a bundle in one processing space S1, and the conductor 2 of one electric wire 1 is disposed in the other processing space S2, and ultrasonic waves are applied in this disposing state. Accordingly, the conductors 2 of the plurality of electric wires 1 are joined to each other in the processing space S1, and the conductor 2 of one electric wire 1 is made into a unified wire in the processing space S2.

The present invention is not limited to the embodiment described above, and modifications, improvements, and the like can be made as appropriate. In addition, the material, shape, dimension, number, arrangement position, and the like of each component in the above-described embodiment are optional and are not limited as long as the present invention can be achieved.

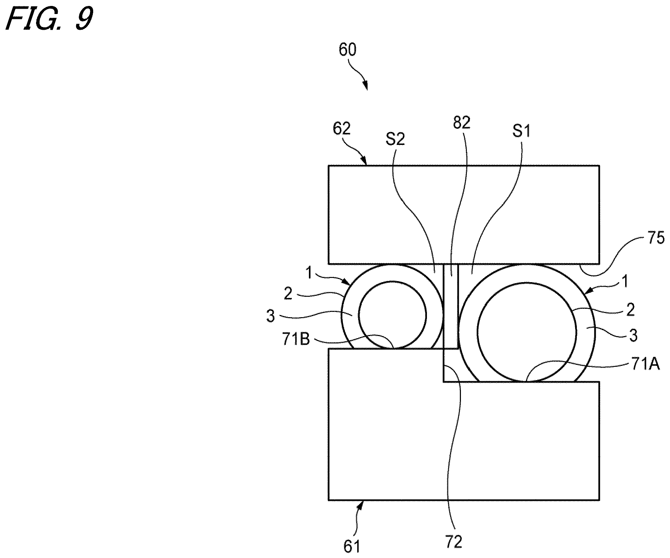

For example, in the above embodiment, the two processing spaces S1, S2 are arranged in series, and the conductors 2 of the electric wires 1 are inserted from opposite sides for processing, but as shown in Fig. 9, the two processing spaces S1, S2 may be arranged in parallel. In this case, the partition plate 82 of the partition mechanism 63 is moved back and forth along the space between the processing spaces S1, S2 arranged in parallel.

In the above embodiment, the step 72 is formed on the horn 61 which is the support portion to form the clamping surfaces (the first clamping surface 71A and the clamping surface 71B) having different heights, but a step may be formed on the anvil 62 which is the pressurizing portion to form clamping surfaces having different heights, or steps may be formed on both the horn 61 and the anvil 62 to form clamping surfaces having different heights.

Further, no step may be formed on either the horn 61 or the anvil 62. In this case, for example, the ultrasonic processing can be simultaneously performed on the conductors 2 of the electric wires 1 having the same diameter by the processing spaces S1, S2 having the same height dimension.

Further, the partition plate 82 partitioning and dividing the processing spaces S1, S2 may be disposed between the horn 61 and the anvil 62 as long as the partition plate 82 has a size and a shape that do not interfere with the ultrasonic wave applying step of lowering the anvil 62 and performing the ultrasonic processing on the conductor 2 of the electric wire 1.

Further, the support portion on which the electric wire 1 is placed may be an anvil, and the pressurizing portion provided above the support portion and raised and lowered with respect to the support portion may be a horn.

Further, in the above embodiment, the conductor of the aluminum electric wire is exemplified as the workpiece to which ultrasonic waves are applied and which is subjected to the ultrasonic processing, but the workpiece is not limited thereto and may be a conductor of an electric wire made of copper or a copper alloy.
[1] An ultrasonic processing device (60) applying an ultrasonic wave to workpieces (conductors 2) to perform ultrasonic processing includes:
   a support portion (horn 61) configured to support the workpieces (conductors 2); a pressurizing portion (anvil 62) capable of moving in a direction of relatively approaching and separating from the support portion (horn 61) and configured to clamp the workpieces (conductors 2) with the support portion (horn 61);
   a vibrator provided on the support portion (horn 61) or the pressurizing portion (anvil 62) and configured to apply ultrasonic vibration to the workpieces (conductors 2) which are clamped between the support portion (horn 61) and the pressurizing portion (anvil 62); and
   a partition plate (82) disposed between the support portion (horn 61) and the pressurizing portion (anvil 62) and configured to divide a space between the support portion (horn 61) and the pressurizing portion (anvil 62) into a plurality of processing spaces (S1, S2) where the workpieces (conductors 2) are capable of being disposed respectively.
   According to the ultrasonic processing device having the configuration of [1], the partition plate that divides the space between the support portion and the pressurizing portion into the plurality of processing spaces is provided. Accordingly, ultrasonic processing can be performed simultaneously by disposing the workpiece in each of the processing spaces, and efficiency of an ultrasonic processing work can be significantly improved and productivity can be increased. Moreover, by separating each processing position by the partition plate, it is possible to eliminate the problem that workpieces are unintentionally attached to each other during the ultrasonic processing.
[2] In the ultrasonic processing device according to [1], the partition plate (82) may be capable of being inserted into and removed from the space between the support portion (horn 61) and the pressurizing portion (anvil 62).
   According to the ultrasonic processing device having the configuration of [2], the partition plate can be pulled out from the space between the support portion and the pressurizing portion when the workpiece disposed in each of the processing spaces is clamped between the support portion and the pressurizing portion. Accordingly, the partition plate does not interfere with the subsequent ultrasonic processing of the workpiece, and the ultrasonic processing can be smoothly performed.
[3] In the ultrasonic processing device according to [1] or [2], a step (72) may be formed on at least one of the support portion (horn 61) and the pressurizing portion (anvil 62), and the processing spaces (S1, S2) have different height dimensions.
   According to the ultrasonic processing device having the configuration of [3], since the height dimensions of the respective processing spaces are different, it is possible to simultaneously perform ultrasonic processing on workpieces of different sizes.
[4] A ultrasonic processing method of applying an ultrasonic wave to workpieces (conductors 2) to perform ultrasonic processing while the workpieces (conductors 2) are clamped between a support portion (horn 61) and a pressurizing portion (anvil 62) includes:
   a dividing step of disposing a partition plate (82) between the support portion (horn 61) and the pressurizing portion (anvil 62) and partitioning a space between the support portion (horn 61) and the pressurizing portion (anvil 62) into a plurality of processing spaces (S1, S2);
   a disposing step of inserting the workpieces (conductors 2) into the plurality of processing spaces (S1, S2) respectively; and
   an ultrasonic applying step of clamping the workpieces (conductors 2) by the support portion (horn 61) and the pressurizing portion (anvil 62) and applying the ultrasonic wave to the workpieces (conductors 2) disposed in the processing spaces (S1, S2).

According to the ultrasonic processing method having the configuration of [4], the space between the support portion and the pressurizing portion is divided into the plurality of processing spaces by the partition plate, the ultrasonic processing can be performed simultaneously by disposing the workpiece in each of the processing spaces, and the efficiency of ultrasonic processing work can be significantly improved and the productivity can be increased. Moreover, by separating each processing position by the partition plate, it is possible to eliminate the problem that the workpieces are unintentionally attached to each other during the ultrasonic processing.

According to the present invention, it is possible to provide the ultrasonic processing device and the ultrasonic processing method capable of efficiently performing the ultrasonic processing on the workpiece to improve productivity.

## Claims

1. An ultrasonic processing device applying an ultrasonic wave to workpieces to perform ultrasonic processing, the ultrasonic processing device comprising:
a support portion configured to support the workpieces;
a pressurizing portion capable of moving in a direction of relatively approaching and separating from the support portion and configured to clamp the workpieces with the support portion;
a vibrator provided on the support portion or the pressurizing portion and configured to apply ultrasonic vibration to the workpieces which are clamped between the support portion and the pressurizing portion; and
a partition plate disposed between the support portion and the pressurizing portion and configured to divide a space between the support portion and the pressurizing portion into a plurality of processing spaces where the workpieces are capable of being disposed.

2. The ultrasonic processing device according to claim 1,
wherein the partition plate is capable of being inserted into and removed from the space between the support portion and the pressurizing portion.

3. The ultrasonic processing device according to claim 1 or 2,
wherein a step is formed on at least one of the support portion and the pressurizing portion, and the processing spaces have different height dimensions.

4. A ultrasonic processing method of applying an ultrasonic wave to workpieces to perform ultrasonic processing while the workpieces are clamped between a support portion and a pressurizing portion, the ultrasonic processing method comprising:
a dividing step of disposing a partition plate between the support portion and the pressurizing portion and partitioning a space between the support portion and the pressurizing portion into a plurality of processing spaces;
a disposing step of inserting the workpieces into the plurality of processing spaces respectively; and
an ultrasonic applying step of clamping the workpieces by the support portion and the pressurizing portion and applying an ultrasonic wave to the workpieces disposed in the processing spaces.
